# EUROPEAN PATENT SPECIFICATION

(11) **EP 0 931 700 B1**
(45) Date of publication and mention of the grant of the patent: **02.07.2003**
(21) Application number: 99300460.5
(22) Date of filing: 21.01.1999
(51) Int. Cl.: B60R 1/06

(54) **Device for tilting and stabilization of an external rear-view mirror**
Vorrichtung zum Verschwenken und Stabilisieren eines Aussenrückblickspiegel
Dispositif pour faire pivoter et stabiliser un rétroviseur extérieur

(30) Priority: 22.01.1998 BR 9802655
(43) Date of publication of application: 28.07.1999
(73) Proprietor: METAGAL INDUSTRIA E COMERCIO LTDA., Estado de Sao Paulo CEP:09990-090 (BR)
(72) Inventor: Moreno, Ricardo Poveda, Rua dos Sabriás 351, Estado de Sao Paulo, CEP 09861-330 (BR); Anze, Fábio Koiti, Rua Lucio Pavan 84, Estado de Sao Paulo, CEP 04076-020 (BR); Milani, Paulo Roberto, Rua Anny 1000 ap.53, Estado de Sao Paulo, CEP 04240-000 (BR)
(74) Representative: Murgatroyd, Susan Elizabeth

(56) References cited:
- DE-U- 8 711 959
- DE-U- 8 813 505
- DE-U- 8 912 763
- PATENT ABSTRACTS OF JAPAN vol. 010, no. 286 (M-521), 27 September 1986 (1986-09-27) & JP 61 105248 A (ICHIKOH IND LTD;OTHERS: 01), 23 May 1986 (1986-05-23)
- PATENT ABSTRACTS OF JAPAN vol. 011, no. 263 (M-619), 26 August 1987 (1987-08-26) & JP 62 064648 A (ICHIKOH IND LTD), 23 March 1987 (1987-03-23)

## Description

The present invention relates to a device or mechanism for tilting and stabilization of an external rear-view mirror, pertaining to the field of automobile parts and which was developed to overcome problems associated with conventional similar devices. A mechanism according to the preamble of claim 1 is known from DE 8711 959U.

External rear-view mirrors for automotive vehicles are already known, being comprised essentially of a mirror plate; a mechanism for adjusting the position of the mirror plate by direct actuation of the mirror or via a mechanical lever or through an automatic button provided inside the vehicle; a casing which houses the plate and the adjustment mechanism; a base on which the casing is mounted and which is mounted on the side of the vehicle; and a mechanism for tilting of the casing with relation to the base. These known mirrors also incorporate a safety device intended to comply with the legal requirements.

This safety device maintains the casing set in the position of use even if subjected to the typical vibrations of the movement of the vehicle and/or to the reaction forces of the air displacement acting on the casing and/or to an impact force on the casing, until certain safety limits, when the casing collides with an obstacle, and also allows the casing to tilt when the impact force surpasses a predetermined limit.

This tilting mechanism with a safety device might have many constructive solutions, as disclosed in Brazilian Utility Model Application Nos. MU 7201917 and MU 7400425 and Brazilian Patent Application No. PI 9301058 of the same applicant.

The above-mentioned utility models show mechanisms in which the connection between the casing and the base is made through helical springs, selected to maintain the casing in the position of use and to allow the same to tilt with relation to the base when subjected to impact above a predetermined limit.

The above-mentioned patent shows a more developed system, which has a further advantage with respect to the previous systems, that is to say, under the action of a tilting force the casing tilts and remains in a tilted detent position.

This detent system meets the legal safety requirements and specifications and is of great usefulness to the user, in so far as, in places with a reduced space of parking or to prevent an impact that might damage the mirror, the mirror can be tilted to an abutted position against the side of the vehicle and in this way avoids the above-mentioned problem. Despite this system being an advance with respect to the above-mentioned ones, it has the problem of being relatively more complex and has a production process that is also relatively more complicated and expensive than the previous systems.

Thus, an object of the present invention is to provide a mechanism for tilting and stabilization for a rear-view mirror that has a simple construction that can be compared with those of the utility models above mentioned and that at the same time can provide the detent function of the above mentioned patent.

Another object of the present invention is to provide a mirror that has a mechanism for tilting and a detent device of a simpler construction and manufacture than the above mentioned mechanisms and other known ones.

Another object of the present invention is that it is capable of adequately complying with the safety requirements and legislation.

Another object of the present invention is to provide the above advantages without complicating or burdening the mirror and the productive process of the mirror.

Accordingly, the present invention consists in a mechanism for tilting and stabilization of an external rear-view mirror, said mirror comprising a mirror plate, a casing housing the mirror plate, and a base which has the casing mounted on it and is capable of being mounted on a side of an automotive vehicle, said mechanism being arranged to tilt the casing with respect to the base and provide stabilization of the casing in respective positions of use and tilted, the mechanism including a device for stabilization of the casing in the respective positions of use and tilted comprising an element projecting from the front of the base directed to the extremity of the position of the casing, and an element provided on the extremity of the casing directed to the base, said elements cooperating with each other in locking of the casing in the position of use or blocking in the tilted position and remaining disposed in planes that are at least oblique with relation to a geometric axis, characterized in that the mechanism includes:-
- joint means for movement of the casing with respect to the base about the geometric axis (X), and in that the element (30) is of resilient structure.

Taking into consideration such above-mentioned problems, and having the objective of overcoming them and aiming to attend the related objects, a device for tilting and stabilization of the external rear-view mirror was developed, the construction, functioning and advantages of which are clearer in the detailed description that follows.

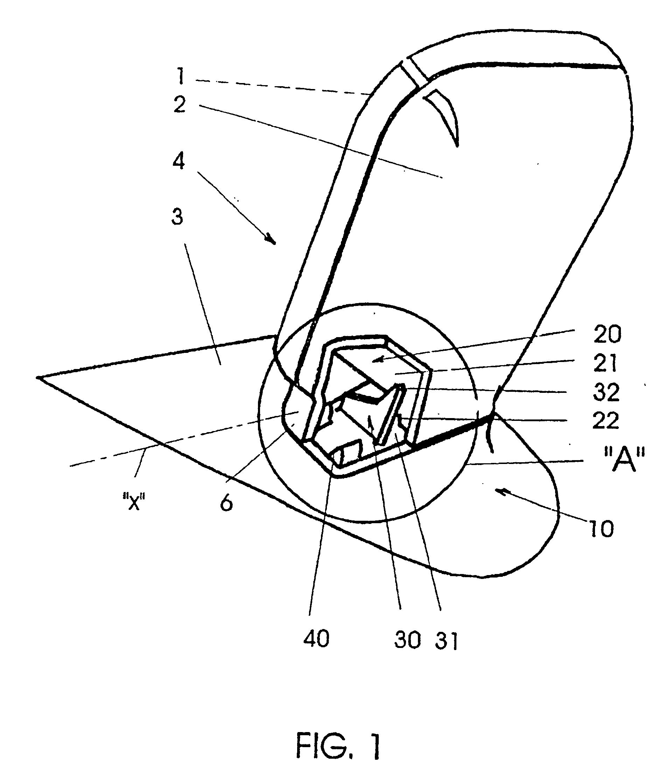

The invention will now be described in more detail with reference to the accompanying drawings, in which:-
Fig. 1 schematically shows an external rear-view mirror with an embodiment of the tilting device of the invention, in the position of use and with a partial section "A" for a better understanding;

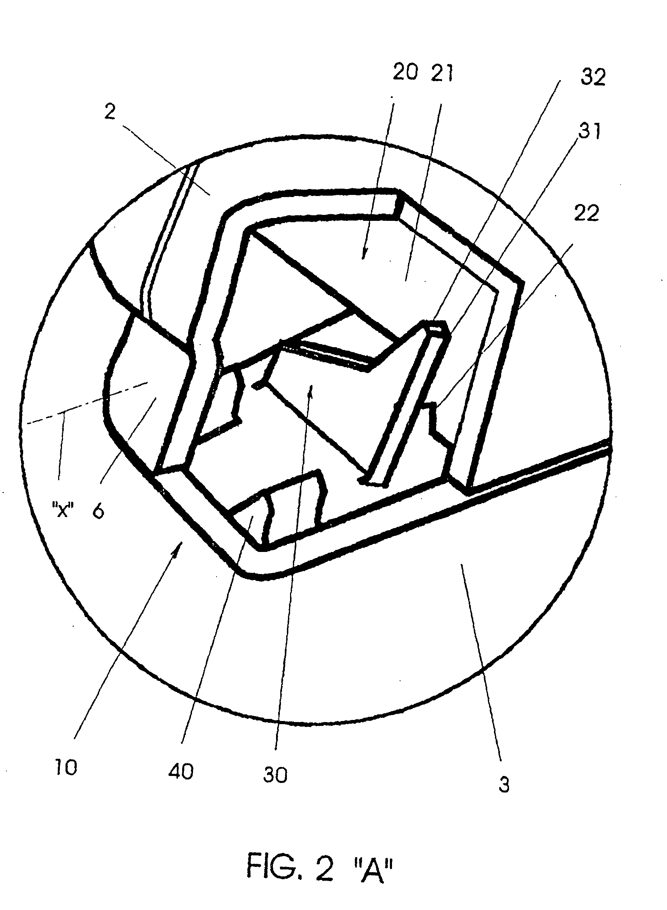

Fig. 2 shows the above partial section "A" enlarged;

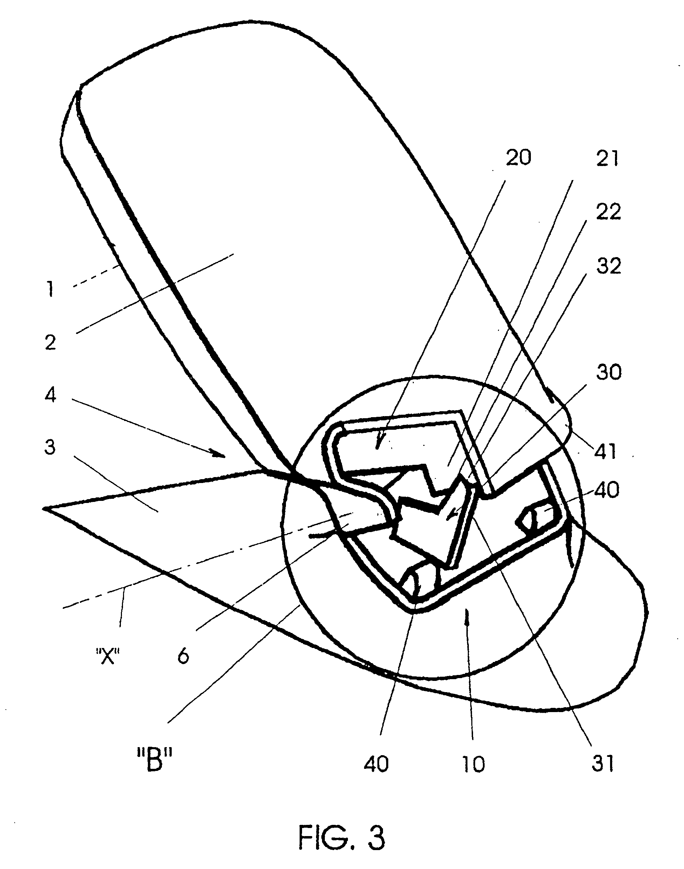

Fig. 3 schematically shows the mirror in the tilted position and with a partial section "B";

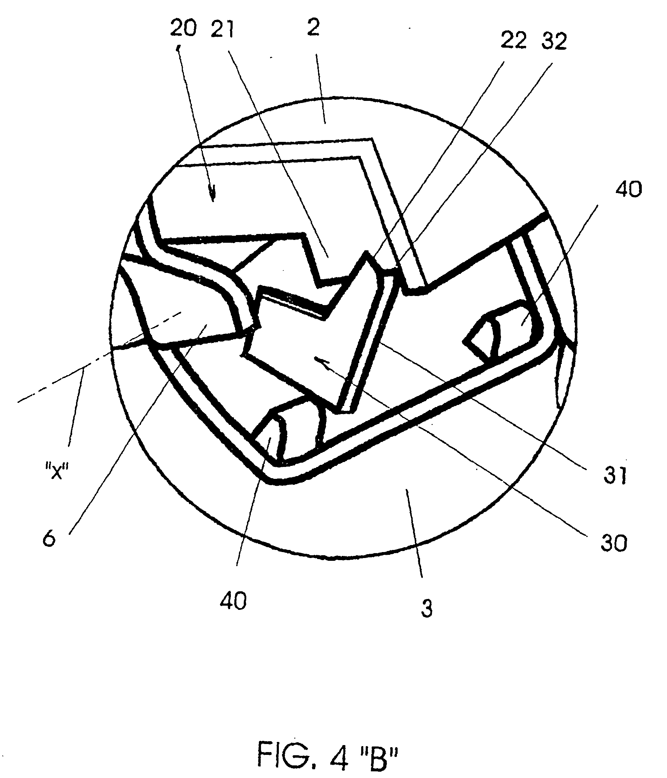

Fig. 4 shows the partial section "B" enlarged; and

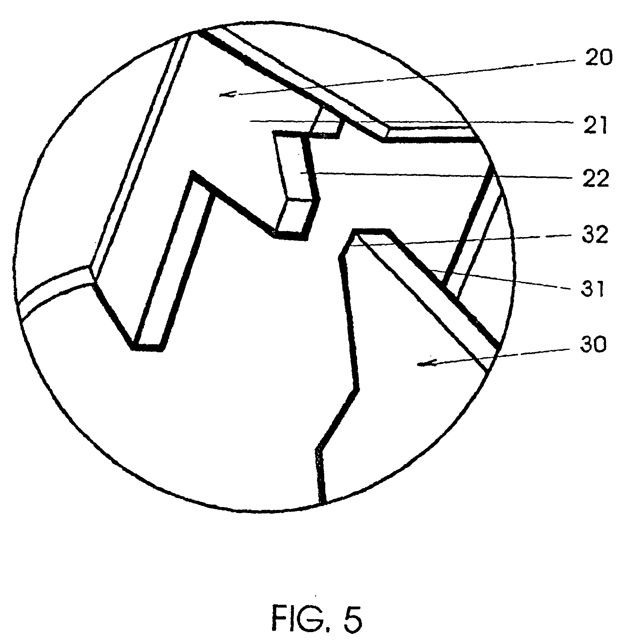

Fig. 5 shows an enlarged detail of the tilting mechanism.

Referring to the drawings, the mechanism of tilting and stabilization is part of an external rear-view mirror for automotive vehicles. The mirror essentially comprises a mirror plate 1; a mechanism (not shown) of adjustment of the position of the mirror plate 1, activated by the direct actuation thereof or via an internal mechanical lever or automatic button of the vehicle; a casing 2 which houses the plate 1 and adjustment mechanism; a base 3 on which the casing 2 is mounted and which is intended to be mounted on the side of an automotive vehicle; and a mechanism 4 for tilting of the casing 2, containing the plate 1 and adjustment mechanism, with relation to the base 3 and of stabilization of the casing 2 in the position of use (orthogonal with relation to the side of the vehicle). and tilted (abutted against the side of the vehicle). The casing 2 and base 3 are made from thermoplastics.

The mechanism 4 of tilting and stabilization essentially comprises:
- joint means 6 of the casing 2, with respect to the base 3, for movement about a substantially vertical geometric axis "X";
- a device 10 of stabilization of the casing 2 in the position of use or tilted comprising an element of resilient structure, preferably a lock flange 30 by interference/blocking fitting, projected from the front of the base 3 turned to the extremity of the position of the casing 2; and an element of structure 20 of locking by interference/blocking fitting, that may be a second resilient flange, provided on the extremity of the casing 2 turned to the base 3. The flange 30 and element 20 are disposed in planes that are at least oblique, or ideally orthogonal, with relation to the "X" geometric axis of point of support of the casing 2, substantially in line, and are formed preferably of the same material and in one piece with the base and casing, respectively, and cooperate with each other in the locking of the casing 2 in the position of use or in the blocking in the tilted position; and
- completing the mechanism 4 of tilting and stabilization, depending on the pressure of locking between the base flange 30 and the element 20 of the casing and of the size and consequently of the weight of the assembly of the casing 2, mirror 1 and adjustment mechanism, one or more positioning members may be provided as support(s) 40 and the corresponding connection surfaces 41 for the support(s), provided on the casing 2 and/or base 3, in one piece with these and chosen to ensure sufficient locking pressure between the flange 30 and the element 20 to maintain the casing in the position of use or to release it for tilting when the user actuates the same.

The flange 30 of the base 3 has at least one surface 31 coplanar with respect to the respective surface 21 of the casing 2, both constituting locking surfaces by interference under pressure of the casing 2 in the base 3 in the position of use of the mirror (orthogonal to the side of the vehicle) and selected to provide a sufficient locking to support the vibrations and the reaction force of the displacement of the air on the casing 2 in the position of use during movement of the vehicle, as well as to support any impact force on the casing in the position of use up to a certain predetermined limit and to release the casing 2 to tilt when the impact force exceeds the predetermined limit.

The flange 30 of the base 3 has at least one bumper or abutment surface 32, disposed at an angle with respect to the locking surface by interference 31 and that is disposed in the trajectory of the corresponding bumper or abutment surface 22 of the element 20 of the casing 2, during the unlocking of the surfaces 21 and 31 in the movement of the casing 2 around the "X" axis from the tilted position to the one of use. Both abutment surfaces 32 and 22 constitute blocking surfaces of the casing 2 in the tilted position (abutted against the side of the vehicle) and are chosen to provide a sufficient blocking to bear the force that acts on the casing 2 and in the sense of returning the same to the position of use, up to a certain predetermined limit.

The abutment surface 32 of the flange 30 of the base 3 and the abutment surface 22 of the element 20 of the casing 2 have profiles and/or disposition with respect to each other and disposition with respect to the "X" geometric axis of point of support of the casing so as to form means for unlocking of the casing 2 from the tilted position, which are actuated whenever a force above the predetermined limit acts on the casing, in the sense of returning-the same to the position of use and effecting the sliding of the abutment surfaces 22 and 32 with respect to each other and in the sense of re-engaging the interference locking surfaces 21, 31 under pressure.

Thus, when the mirror is in the use position (perpendicular to the side of the vehicle), the flange 30 of the base 3 and the element 20 of the casing 2 are presented engaged by interference, achieving the locking of the casing 2 and consequently of the internal mirror 1 to the same, in the position of use. In these conditions, both flange 30 and element 20, or at least the flange 30, are presented slightly bent due to the locking pressure of the connection surface by interference 21 of the flange 30. Such locking pressure which is helped, if needed, by the positioning members 40, 41 is sufficient to withstand the vibrations to which the mirror assembly is subjected to during movement of the vehicle, the reaction force of the air displacement which acts on the casing 2 during movement of the vehicle and which tends to release the casing from the position of use, and the force, up to a predetermined limit set by legislation, imparted by impact on the casing 2 during movement of the vehicle, such as when the mirror collides against a passer-by or other obstacles, thus protecting the integrity of the assembly and of the mirror itself.

In this condition, when the mirror collides against an obstacle with an impact force inferior to the predetermined limit, it remains in the position of use. However, when it collides with a force superior to the predetermined limit, the flange 30 and the element 20 are released and consequently the casing 2 tilts with respect to the base 3 to the tilted position (abutted against the side of the vehicle), thus protecting the integrity of the impact point, which is important if it is a passer-by, and of the mirror itself. Simultaneously, there is the release of the locking pressure between both the flange 30 and the element 20, or at least the flange 30 of the base 3 deflects and remains coplanar to the element 20 of the casing 2. In this state the abutment surfaces 22 and 32 mutually gather themselves or remain aligned, impeding the casing 2 from returning to the position of use and thus remaining tilted. This same effect is produced whenever the user of the vehicle intends to decrease its width, to park in a narrow place, and manually forces the casing 2 to the tilting position.

If there is any pressure on the casing, when tilted to a certain limit, the abutment surface 22 of the element 20 causes pressure over the abutment surface 32 of the flange 30 of the base 3, but there is no unlocking of the casing 2 from the tilted position.

To return the mirror to the position of use, the user presses the front of the casing 2 in the tilted position with a force above the predetermined limit, by which the abutment surface 22 of the element 20 presses over the abutment surface 32 of the flange 30 of the base 3 and there is a bending of the flange 30 and the element 20, or at least of the flange 30, and a consequent sliding between the abutment surfaces 22 and 32, in the sense of restoring the interference locking surfaces 21 and 31 coplanar. When this happens and with the continuation of the force on the casing 2, there is reconnection by interference of the flange 30 and the element 20 and the relocking of the casing 2 set in the position of use.

In this way, the tilting device of the present invention solves the problem of conventional similar devices in that it presents an extremely simple construction and manufacture.

Within the basic concept, above described, it is required that the tilting device may present modifications with relation to materials, dimensions and constructive details without departing from the scope of the appended claims.

Within this, more then one flange 30 and the corresponding elements 20 for locking by interference may be provided, as well as positioning members 40,41.

Such flanges 30 and element 20 and positioning members 40,41 may have any configuration and dimensions specific to each case, so as to ensure the adequate locking and blocking in accordance with the invention.

The interference locking surfaces 21 and 31 of the element 20 and flange 30 may have profiles and/or relative positions and/or any superficial finishing that ensures the functioning of the same in accordance with the invention.

The abutment surfaces 22 and 32 of the element 20 and flange 30 may have profiles, relative positions and any superficial finishing that allow them to work in accordance with the invention. For instance, the abutment surface 22 might be formed by a "V" cut made in the extremity of the flange 20 and the abutment surface 32 might be formed by a corresponding tooth provided in the flange 30 or vice versa. Both cut and tooth may be disposed in a way so as to define smooth surfaces, located at an angle with respect to the interference locking surfaces 21 and 31 and funnel-shaped in their direction to the opposed surfaces to the mentioned surfaces 21 and 31. These funnel-shapings in the direction substantially parallel to the "X" geometric axis of point of support of the casing 2 in the base 3 are arranged in such a way that when the casing 2 is displaced from the tilted position to the position of use, the force that is applied to the same can be decomposed into the component of tilting of the casing 2 and the component of the relative sliding of the abutment surfaces 22 and 32. Logically other solutions might be given.

## Claims

1. Mechanism for tilting and stabilization of an external rear-view mirror, said mirror comprising a mirror plate (1), a casing (2) housing the mirror plate (1), and a base (3) which has the casing (2) mounted on it and is capable of being mounted on a side of an automotive vehicle, said mechanism (4) being arranged to tilt the casing (2) with respect to the base (3) and provide stabilization of the casing (2) in respective positions of use and tilted the mechanism (4) including a device (10) for stabilization of the casing (2) in the respective positions of use and tilted comprising an element (30) projecting from the front of the base (3) directed to the extremity of the position of the casing (2) and an element (20) provided on the extremity of the casing (2) directed to the base (3), said elements (20,30) cooperating with each other in the locking of the casing (2) in the position of use or blocking in the tilted position and remaining disposed in planes that are at least oblique with relation to a geometric axis (X),
**characterized in that** the mechanism (4) further includes:-
- joint means (6) for movement of the casing (2) with respect to the base (3) about the geometric axis (X), and **in that** the element (30) is of resilient structure.

2. A mechanism as claimed in claim 1, wherein the element (30) on the base (3) is a locking flange by interference/blocking fitting.

3. A mechanism as claimed in claim 1 or 2, wherein the element (20) of the casing (2) is a resilient locking flange by interference/blocking fitting.

4. A mechanism as claimed in claim 1, 2 or 3, wherein said elements (20,30) remain disposed in planes orthogonal with relation to said geometric axis (X).

5. A mechanism as claimed in any preceding claim, wherein said elements (20,30) are made of the same material and in one piece with said base (3) and said casing (2), respectively.

6. A mechanism as claimed in any preceding claim, including one or more positioning members (4) and corresponding connection surfaces (41) integrally provided on the casing (2) and/or base (3) and arranged to ensure the locking pressure between the elements (20,30).

7. A mechanism as claimed in any preceding claim, wherein the elements (20,30) have respective coplanar locking surfaces (21,31) which provide the locking by interference under pressure of the casing (2) with the base (3) in the position of use of the mirror and provide a sufficient locking to stand vibrations and the reaction force of displacement of air on the casing (2) in the position of use during movement of the vehicle, as well as to stand any impact force on the casing in the position of use, up to a certain predetermined limit, and to release the casing (2) to tilt when the impact force exceeds the predetermined limit.

8. A mechanism as claimed in claim 7, wherein the element (30) of the base (3) has at least one abutment surface (32) disposed at an angle with relation to the locking surface (31) and which is disposed in the trajectory of a corresponding abutment surface (22) of the element (20) of the casing (2) during the unlocking of the locking surfaces (21) and (31) in the movement of the casing (2) around the geometric axis (X) from the tilted position to the position of use, both abutment surfaces (32) and (22) forming surfaces of blocking of the casing (2) in the tilted position and being arranged to provide a sufficient blocking to bear force on the casing (2) in the sense of returning them to the position of use, up to a predetermined limit.

9. A mechanism as claimed in claim 8, wherein the abutment surface (32) of the element (30) of the base (3) and abutment surface (22) of the element (20) of the casing (2) have profiles and/or relative dispositions with relation to each other and to the geometric axis (X) which are selected to achieve release of the casing (2) from the tilted position when a force above the predetermined limit acts on the casing (2), in the sense of returning the casing (2) to the position of use and providing a sliding of the abutment surfaces (22) and (32) with relation to each other in the sense of restoring under pressure the locking surfaces (21,31) to a coplanar position and in a state of reengagement by interference fit.

10. An external rear-view mirror for an automotive vehicle, comprising a mirror plate (1), a casing (2) housing the mirror plate (1), and a base (3) which has the casing (2) mounted on it and is capable of being mounted on a side of an automotive vehicle, and a mechanism (4) for tilting and stabilization of said mirror, as claimed in any preceding claim.

## Patentansprüche

1. Vorrichtung zum Kippen und Stabilisieren eines Außenrückspiegels, wobei der Spiegel eine Spiegelplatte (1), ein Gehäuse (2) in dem die Spiegelplatte (1) untergebracht ist, und eine Basis (3) umfasst, an der das Gehäuse (2) befestigt ist und die sich eignet, um an einer Seite eines Kraftfahrzeugs befestigt zu werden, wobei die Vorrichtung (4) dazu eingerichtet ist, das Gehäuse (2) bezüglich der Basis (3) zu kippen und eine Stabilisierung des Gehäuses (2) in Stellungen des Gebrauchs bzw. in einer gekippten Stellung vorzusehen, wobei die Vorrichtung (4) eine Einrichtung (10) einschließt, die dazu dient, das Gehäuse (2) in der Stellung des Gebrauchs bzw. in der gekippten Stellung zu stabilisieren, die ein Element (30), das aus der Vorderseite der Basis (3) in Richtung des äußersten Endes der Stellung des Gehäuses (2) weist, und ein Element (20) umfasst, das, auf die Basis (3) gerichtet, an dem äußersten Ende des Gehäuses (2) vorgesehen ist, wobei die Elemente (20,30) geeignet zusammenwirken, um das Gehäuse (2) in der Gebrauchsstellung zu verriegeln oder in der gekippten Stellung festzuhalten, und in Ebenen angeordnet bleiben, die gegenüber einer geometrischen Achse (X) zumindest schiefwinkelig sind,
**dadurch gekennzeichnet, dass** die Vorrichtung (4) ferner
- Gelenkmittel (6) aufweist, die dazu dienen, eine Bewegung des Gehäuses (2) bezüglich der Basis (3) um die geometrische Achse (X) zu ermöglichen,
- und das Element (30) eine nachgiebige Struktur aufweist.

2. Vorrichtung nach Anspruch 1, wobei das Element (30) an der Basis (3) durch einen klemmenden/sperrenden Sitz einen Verriegelungsflansch bildet.

3. Vorrichtung nach Anspruch 1 oder 2, wobei das Element (20) des Gehäuses (2) durch einen klemmenden/sperrenden Sitz einen nachgebenden Verriegelungsflansch darstellt.

4. Vorrichtung nach Anspruch 1, 2 oder 3, wobei die Elemente (20,30) in Ebenen verbleiben, die senkrecht zu der geometrischen Achse (X) verlaufen.

5. Vorrichtung nach einem der vorhergehenden Ansprüche, wobei die Elemente (20,30) aus dem gleichen Werkstoff und mit der Basis (3) bzw. dem Gehäuse (2) einstückig hergestellt sind.

6. Vorrichtung nach einem der vorhergehenden Ansprüche, die ein oder mehrere Positionierungselemente (4) und entsprechende Anschlussflächen (41) aufweist, die einstückig an dem Gehäuse (2) und/oder der Basis (3) ausgebildet sind und dazu eingerichtet sind, um den verriegelnden Druck zwischen den Elementen (20,30) sicherzustellen.

7. Vorrichtung nach einem der vorhergehenden Ansprüche, wobei die Elemente (20,30) entsprechende koplanare Verriegelungsflächen (21,31) aufweisen, die in der Gebrauchsstellung des Spiegels die Verriegelung des Gehäuses (2) mit der Basis (3) durch das unter Druck bestehende Klemmen herstellen und eine ausreichende Verriegelung vorsehen, um den Schwingungen und der Reaktionskraft standzuhalten, die in der Gebrauchsstellung während der Bewegung des Fahrzeugs aufgrund der Verdrängung der Luft auf das Gehäuse (2) wirkt, sowie in der Gebrauchsstellung bis zu einem gewissen vorgegebenen Grenzwert jeder auf das Gehäuse wirkenden Aufprallkraft zu widerstehen, und das Gehäuse (2) für ein Kippen freizugeben, wenn die Aufprallkraft den vorgegebenen Grenzwert überschreitet.

8. Vorrichtung nach Anspruch 7, wobei das Element (30) der Basis (3) wenigstens eine Anlagefläche (32) aufweist, die unter einem Winkel zu der Verriegelungsfläche (31) ausgebildet ist und die in der Bahn einer entsprechenden Anlagefläche (22) des Elements (20) des Gehäuses (2) angeordnet ist, die diese während des Entriegelns der Verriegelungsflächen (21) und (31) im Verlauf der Bewegung des Gehäuses (2) um die geometrische Achse (X) aus der gekippten Stellung in die Gebrauchsstellung durchläuft, wobei die beiden Anlageflächen (32) und (22) Sperrflächen des Gehäuses (2) in der gekippten Stellung bilden und geeignet eingerichtet sind, um eine ausreichende Sperrwirkung bereitzustellen, um bis zu einem vorgegebenen Grenzwert einer Kraft zu widerstehen, die auf das Gehäuse (2) in Richtung eines Zurückbewegens derselben in die Gebrauchsstellung wirkt.

9. Vorrichtung nach Anspruch 8, wobei die Anlagefläche (32) des Elements (30) der Basis (3) und die Anlagefläche (22) des Elements (20) des Gehäuses (2) mit Profilen ausgebildet sind und/oder zueinander und gegenüber der geometrischen Achse (X) relative Neigungen aufweisen, die geeignet ausgewählt sind, um eine Freigabe des Gehäuses (2) aus der gekippten Stellung zu erreichen, wenn eine den vorgegebenen Grenzwert überschreitende Kraft auf das Gehäuse (2) in Richtung der Rückkehr des Gehäuses (2) in die Gebrauchsstellung wirkt, und ein Gleiten der Anlageflächen (22) und (32) relativ zueinander im Hinblick darauf vorsieht, die Verriegelungsflächen (21,31) unter Druck wieder in eine koplanare Stellung und in einen Zustand des wieder in Eingriff gebrachten Klemmsitzes zu bringen.

10. Außenrückspiegel für ein Kraftfahrzeug, der eine Spiegelplatte (1), ein Gehäuse (2) in dem die Spiegelplatte (1) untergebracht ist, und eine Basis (3), an der das Gehäuse (2) befestigt ist und die sich eignet, um an einer Seite eines Kraftfahrzeugs befestigt zu werden, und eine Vorrichtung (4) umfasst, die dazu dient, den Spiegel zu kippen und zu stabilisieren, nach einem der vorhergehenden Ansprüche.

## Revendications

1. Mécanisme pour basculer et stabiliser un rétroviseur extérieur, ledit rétroviseur comprenant une plaque miroir (1), un boîtier (2) pour loger la plaque miroir (1), et une base (3) sur laquelle est monté le boîtier (2) et qui est susceptible d'être montée sur le côté d'un véhicule automobile, ledit mécanisme (4) étant agencé pour basculer le boîtier (2) par rapport à la base (3) et fournir une stabilisation du boîtier (2) dans des positions respectives d'utilisation et de bascule, le mécanisme (4) comprenant :
- un dispositif (10) pour stabiliser le boîtier (2) dans les positions respectives d'utilisation et de bascule, comprenant un élément (30) faisant saillie de l'avant de la base (3) dirigé vers l'extrémité de la position du boîtier (2), et un élément (20) prévu sur l'extrémité du boîtier (2) dirigé vers la base (3), lesdits éléments (20, 30) coopérant l'un avec l'autre pour le verrouillage du boîtier (2) dans la position d'utilisation, ou pour le blocage dans la position de bascule, et restant disposés selon des plans qui sont au moins obliques par rapport à un axe géométrique (X),
**caractérisé en ce que** le mécanisme (4) comprend en outre :
- des moyens d'articulation (6) pour déplacer le boîtier (2) par rapport à la base (3) autour de l'axe géométrique (X),
- et **en ce que** l'élément (30) est de structure élastique.

2. Mécanisme selon la revendication 1, dans lequel l'élément (30) sur la base (3) est une bride de verrouillage par ajustage avec serrage et blocage.

3. Mécanisme selon la revendication 1 ou 2, dans lequel l'élément (20) du boîtier (2) est une bride élastique de verrouillage par ajustage avec serrage et blocage.

4. Mécanisme selon la revendication 1, 2 ou 3, dans lequel lesdits éléments (20, 30) restent disposés selon des plans orthogonaux par rapport au dit axe géométrique (X).

5. Mécanisme selon l'une quelconque des revendications précédentes, dans lequel lesdits éléments (20, 30) sont fabriqués dans le même matériau et d'un seul tenant avec ladite base (3) et ledit boîtier (2), respectivement.

6. Mécanisme selon l'une quelconque des revendications précédentes, comprenant un ou plusieurs éléments de positionnement (4) et les surfaces de raccordement correspondantes (41), intégralement prévus sur le boîtier (2) et/ou la base (3) et agencés pour assurer la pression de verrouillage entre les éléments (20, 30).

7. Mécanisme selon l'une quelconque des revendications précédentes, dans lequel les éléments (20, 30) présentent des surfaces de verrouillage respectives coplanaires (21, 31) qui fournissent le verrouillage par serrage sous pression du boîtier (2) avec la base (3) dans la position d'utilisation du miroir, et fournissent un verrouillage suffisant pour résister aux vibrations et à la force de réaction due au déplacement de l'air sur le boîtier (2) dans la position d'utilisation durant le déplacement du véhicule, de même pour résister à une quelconque force d'impact sur le boîtier dans la position d'utilisation, jusqu'à une certaine limite prédéterminée, et pour libérer le boîtier (2) en lui permettant de basculer lorsque la force d'impact dépasse la limite prédéterminée.

8. Mécanisme selon la revendication 7, dans lequel l'élément (30) de la base (3) a au moins une surface de butée (32) disposée en angle par rapport à la surface de verrouillage (31), et qui est disposée sur la trajectoire d'une surface de butée correspondante (22) de l'élément (20) du boîtier (2) pendant le déverrouillage des surfaces de verrouillage (21) et (31) dans le déplacement du boîtier (2) autour de l'axe géométrique (X), de la position de bascule à la position d'utilisation, les deux surfaces de butée (32) et (22) formant des surfaces pour bloquer le boîtier (2) dans la position de bascule, et étant agencées pour fournir un blocage suffisant pour supporter les efforts subis par le boîtier (2), au sens de les retourner à leur position d'utilisation, jusqu'à une limite prédéterminée.

9. Mécanisme selon la revendication 8, dans lequel la surface de butée (32) de l'élément (30) de la base (3), et la surface de butée (22) de l'élément (20) du boîtier (2), ont des profils et/ou des dispositions relatives l'une par rapport à l'autre et par rapport à l'axe géométrique (X), qui sont choisis pour permettre le dégagement du boîtier (2) à partir de la position de bascule quand une force supérieure à la limite prédéterminée agit sur le boîtier (2), au sens de retourner le boîtier (2) à sa position d'utilisation et de fournir un glissement des surfaces de butée (22) et (32) l'une par rapport à l'autre au sens de rétablir sous la pression leurs surfaces de verrouillage (21, 31) selon une position coplanaire et dans un état de réengagement par ajustement avec serrage.

10. Rétroviseur extérieur pour un véhicule automobile, comprenant une plaque de miroir (1), un boîtier (2) logeant la plaque de miroir (1), et une base (3) sur laquelle est monté le boîtier (2) et qui est susceptible d'être montée sur le côté d'un véhicule automobile, et un mécanisme (4) pour basculer et stabiliser ledit miroir, comme revendiqué dans les revendications précédentes.
